# EUROPÄISCHE PATENTSCHRIFT

(11) **EP 2 673 487 B1**
(45) Veröffentlichungstag und Bekanntmachung des Hinweises auf die Patenterteilung: **21.04.2021**
(21) Anmeldenummer: 12707031.6
(22) Anmeldetag: 08.02.2012
(51) Int. Cl.: F02B 37/18, F16K 15/03

(54) **VENTILEINRICHTUNG FÜR EIN ABBLASEVENTIL EINES ABGASTURBOLADERS**
VALVE DEVICE FOR A BLOW-OFF VALVE OF A TURBOCHARGER
DISPOSITIF DE SOUPAPE POUR UNE SOUPAPE DE DÉCHARGE D'UN TURBOCOMPRESSEUR À GAZ D'ÉCHAPPEMENT

(30) Priorität: 11.02.2011 DE 102011011003
(43) Veröffentlichungstag der Anmeldung: 18.12.2013
(73) Patentinhaber: IHI Charging Systems International GmbH, 99334 Amt Wachsenburg OT Ichtershausen (DE); AUDI AG, 85057 Ingolstadt (DE)
(72) Erfinder: LÜDDECKE, Bernhardt, 67259 Großniedesheim (DE); BURMESTER, Hermann, 69115 Heidelberg (DE); EHRHARD, Jan, 69168 Wiesloch (DE); FILSINGER, Dietmar, 69168 Wiesloch (DE); IKEYA, Nobuyuki, Yokohama 235-8501 (JP); WINTER, Christian, 69250 Schönau (DE); HINKELMANN, Achim-Hans, 85049 Ingolstadt (DE)
(74) Vertreter: Heeb-Keller, Marion Annette
(86) Internationale Anmeldenummer: PCT/EP2012/000572
(87) Internationale Veröffentlichungsnummer: WO 2012/107224

(56) Entgegenhaltungen:
- WO-A1-2010/123913
- WO-A2-2010/036532
- WO-A2-2010/039596
- DE-A1- 10 344 815
- JP-A- 2004 332 686
- JP-A- 2007 247 560

## Beschreibung

Die Erfindung betrifft eine Ventileinrichtung für ein Abblaseventil eines Abgasturboladers der im Oberbegriff des Patentanspruchs 1 angegebenen Art.

Die DE 20 2010 005 747 U1 offenbart eine Ventileinrichtung für ein Abblasventil eines Abgasturboladers mit einem Ventilteller und mit einem Schwenkarm, an dem der Ventilteller befestigt ist. Der Ventilteller ist so an dem Schwenkarm befestigt, dass der Ventilteller relativ zu dem Schwenkarm ein Spiel aufweist, insbesondere eine Kippbewegung relativ zu dem Schwenkarm ausführen kann.

Es hat sich gezeigt, dass es infolge dieses Spiels zu hörbaren und unangenehmen Geräuschen während des Betriebs des Turboladers kommt. Diese Geräusche sind von Insassen eines Kraftwagens mit dem Turbolader und der Ventilklappe als ein Rasseln und/oder Prasseln wahrnehmbar. Das geschilderte Spiel ist jedoch vonnöten zur Realisierung von Winkelausgleichen und/oder zur Kompensierung von insbesondere fertigungs- und/oder bauteilbedingten Toleranzen des Turboladers.

Aus der WO 2010/036532 A2 ist eine Ventileinrichtung für ein Abblaseventil eines Abgasturboladers bekannt, welches einen Ventilteller mit einer asymmetrischen Ventilfläche aufweist. Ein Hebelarm, welcher zur Bewegung des Ventiltellers ausgebildet ist, ist von einer Symmetrieachse der asymmetrischen Ausbildung der Ventilfläche beabstandet den Ventilteller aufnehmend ausgebildet.

Der DE 103 44 815 A1 kann eine Ventileinrichtung für ein Abblaseventil eines Abgasturboladers entnommen werden, dessen Ventilteller eine asymmetrisch ausgebildete Ventilfläche ohne Symmetrieachse besitzt.

Die JP 2004 332686 A offenbart eine Ventileinrichtung für ein Abblaseventil eines Abgasturboladers mit einem Ventilteller, welcher zur Bewegung an einem Hebelarm angeordnet ist, wobei eine Ventilfläche von einer üblichen runden Form abweichend ausgebildet ist. Die Ventilfläche ist ovalartig eine Symmetrieachse aufweisend ausgebildet, wobei der Hebelarm symmetrisch zur Symmetrieachse ausgebildet ist.

Aus der WO 2010/039596 A2 geht eine Ventileinrichtung für ein Abblaseventil eines Abgasturboladers hervor, dessen Ventilteller eine einem Abgasstrom zugewandt ausgebildete Ausbuchtung aufweist.

Der WO 2010/123913 A kann eine Ventileinrichtung für ein Abblaseventil eines Abgasturboladers entnommen werden, wobei ein kreisförmiger Ventilteller des Abblaseventils um seine Drehachse verdrehbar ist, wobei die Drehachse den Ventilteller symmetrisch durchsetzend ausgeführt ist.

Aus der JP 2007 247560 A geht eine Ventileinrichtung für ein Abblaseventil eines Abgasturboladers hervor, wobei ein Ventilteller des Abblaseventils eine asymmetrische Ventilfläche aufweist, welche eine Symmetrieachse besitzt, entlang derer eine Befestigung der Ventilfläche an einem Hebelarm der Ventileinrichtung ausgebildet ist. Die asymmetrische Ausbildung der Ventilfläche ist symmetrisch zur Symmetrieachse, wobei die Symmetrieachse symmetrisch zu einer Längsachse des Hebelarms ausgebildet ist.

Es ist daher Aufgabe der vorliegenden Erfindung, eine Ventileinrichtung für ein Abblaseventil eines Abgasturboladers der eingangs genannten Art derart weiterzuentwickeln, dass die Ventileinrichtung ein verbessertes Geräuschverhalten aufweist.

Diese Aufgabe wird durch eine Ventileinrichtung für ein Abblaseventil eines Abgasturboladers mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Eine solche Ventileinrichtung für ein Abblaseventil eines Abgasturboladers umfasst einen Ventilteller, mittels welchem ein Strömungsquerschnitt eines Umgehungskanals des Abgasturboladers, über welchen ein Laufrad des Abgasturboladers von einem Gas, insbesondere Abgas, zu umgehen ist, einstellbar ist und welcher eine stirnseitige Ventilfläche zum Einstellen des Strömungsquerschnitts aufweist. Erfindungsgemäß ist vorgesehen, dass die Ventilfläche zumindest im Wesentlichen asymmetrisch ausgebildet ist.

Es hat sich gezeigt, dass es herkömmlicherweise insbesondere bei geöffneter Ventileinrichtung, wodurch der Umgehungskanal zumindest teilweise fluidisch freigegeben ist, so dass dieser von dem Gas, insbesondere dem Abgas durchströmt werden kann, zu den geschilderten Geräuschen kommt. Diese Geräusche resultieren insbesondere aus einer Bewegung des Ventiltellers, welcher aufgrund der Bewegung einen Ventilsitz berührt, so dass es zu dem Rasseln und/oder Prasseln kommt. Der Ventilsitz ist zum Ventilteller bzw. zur Ventilfläche korrespondierend ausgebildet, wobei der Ventilsitz üblicherweise in einem Turbinengehäuse des Abgasturboladers angeordnet ist. Die Bewegung wird insbesondere durch ein aerodynamisches Zusammenwirken des Ventiltellers mit dem den Umgehungskanal durchströmenden Gas bewirkt. Insbesondere spielen hohe Druckpulsationen und/oder hohe Volumen- bzw. Massenstrompulsationen des Gases, welche den Ventilteller zumindest teilweise an- und/oder umströmen, eine wichtige Rolle und haben einen großen Einfluss auf die unerwünschten und beispielsweise in einem Innenraum eines Kraftwagens, insbesondere eines Personenkraftwagens, wahrnehmbaren Geräusche.

Ferner werden die Geräusche verursacht durch ein auf dem Ventilteller wirkendes Moment, welches während des Betriebs des Abgasturboladers sein Vorzeichen wechselt. Dies bedeutet, dass sich ein positives mit einem negativen auf den Ventilteller wirkenden Moment sukzessive während des Betriebs des Abgasturboladers abwechselt und somit das Klappern und/oder Prasseln des Ventiltellers bzw. Ventileinrichtung verursachen kann, wobei das Moment um eine Rotationsachse der Ventileinrichtung wirkt. Dieses Moment wiederum wird verursacht durch aerodynamische Kräfte, die sich während des Betriebs des Abgasturboladers, insbesondere während Arbeitsspielen einer dem Abgasturbolader zugeordneten Verbrennungskraftmaschine, ändern. Ebenso verändern sich Angriffspunkte des auf den Ventilteller bzw. Ventileinrichtung wirkenden Moments.

Darüber hinaus hat es sich gezeigt, dass die Bewegung und damit die infolge der Bewegung entstehenden Geräusche durch eine Selbstanregung der Ventileinrichtung und insbesondere des Ventiltellers verursacht werden können, falls keine entsprechenden Gegenmaßnahmen getroffen sind.

Um die insbesondere durch die Selbstanregung verursachten unerwünschten Geräusche zu reduzieren oder zu vermeiden, wird die äußere Geometrie der Ventileinrichtung und insbesondere des Ventiltellers derart gestaltet, dass die Selbstanregung vermieden wird oder in einen Anregungsfrequenzbereich verlagert, das heißt verschoben, wird, in welchem die Geräusche vom menschlichen Gehör nicht hörbar sind. Somit ist es bei der erfindungsgemäßen Ventileinrichtung vorgesehen, dass die Ventilfläche des Ventiltellers asymmetrisch ausgebildet ist. Die geometrische Ausgestaltung des Ventiltellers der erfindungsgemäßen Ventileinrichtung ist dergestalt, dass die geometrische Gestaltung eine asymmetrische Entwicklung des geschilderten auf den Ventilteller wirkenden Moments während der Arbeitsspiele der Verbrennungskraftmaschine bewirkt. Dies bedeutet, dass der geschilderte und herkömmlicherweise existierende Wechsel des Vorzeichens des auf den Ventilteller wirkenden Moments vermieden ist. Dadurch ist die Entstehung der geschilderten unangenehmen Geräusche reduziert oder vermieden, was zu einem verbesserten Fahrkomfort für die Insassen führt. Auch ist es durch die entsprechende geometrische Gestaltung vermieden, dass sich der Ventilteller auf dessen korrespondierenden Ventilsitz verzieht.

Der Umgehungskanal, welcher auch als Wastegate oder als Abblasekanal bezeichnet wird, wird insbesondere in hohen Drehzahl- und/oder Lastbereichen durch den Ventilteller freigegeben, so dass zumindest ein Teil von Abgas der Verbrennungskraftmaschine das Laufrad, insbesondere ein Turbinenrad einer Turbine des Abgasturboladers, umgehen kann. Somit treibt dieses Abgas das Turbinenrad nicht an. Die Freigabe des Umgehungskanals in hohen Drehzahl- und/oder Lastbereichen ist vorgesehen, um in diesen hohen Drehzahl- und/oder Lastbereichen einen hohen Durchsatzparameter beispielsweise der Turbine sowie eine hohe Durchsatzparameterspreizung derselbigen darzustellen, damit diese sowohl in hohen Drehzahl- und/oder Lastbereichen, insbesondere in Vollastbereichen, wie auch in demgegenüber niedrigen Last- und/oder Drehzahlbereichen effizient betrieben werden kann. Dadurch kann ein geringer Kraftstoffverbrauch der Verbrennungskraftmaschine realisiert werden, was mit geringen CO₂-Emissionen einhergeht.

In den hohen Drehzahl- und/oder Lastbereichen ist es möglich, dass die geschilderten Geräusche von durch die Verbrennungskraftmaschine verursachten Geräuschen übertönt werden, so dass die Geräusche des Ventiltellers bei herkömmlichen Ventileinrichtungen nicht zu hören sind. Jedoch kann es auch in diesen hohen Drehzahl- und/oder Lastbereichen Betriebszustände der Verbrennungskraftmaschine geben, in welchen die Geräusche bei herkömmlichen Ventileinrichtungen zu hören sind.

Zur Darstellung eines besonders geringen Kraftstoffverbrauchs ist vorgesehen, dass der Umgehungskanal auch in dem gegenüber geringeren Drehzahl- und/oder Lastbereichen geöffnet wird, in denen die bei herkömmlichen Ventileinrichtungen entstehenden Geräusche nicht von von der Verbrennungskraftmaschine verursachten Geräuschen übertönt werden und somit besonders deutlich hörbar von den Insassen wahrgenommen werden können.

Die erfindungsgemäße Ventileinrichtung ermöglicht somit nicht nur die Vermeidung oder Reduzierung der Geräusche in den hohen Drehzahl- und/oder Lastbereichen, insbesondere den Vollastbereichen, der Verbrennungskraftmaschine, sondern auch in den niedrigeren Drehzahl- und/oder Lastbereichen, in welchen die Geräusche in Form eines Klapperns, Prasselns oder Rasselns deutlich im Innenraum des Kraftwagens wahrzunehmen wären. Somit ermöglicht die erfindungsgemäße Ventileinrichtung die Darstellung eines besonders hohen Fahrkomforts für die Insassen des Kraftwagens, insbesondere des Personenkraftwagens. Ferner birgt die erfindungsgemäße Ventileinrichtung den Vorteil, dass die Reduzierung oder die Vermeidung der Geräusche auf besonders kostengünstige Art realisiert ist, was die Gesamtkosten des Abgasturboladers gering hält.

Es hat sich gezeigt, dass auch eine Verbindungsstelle, an welcher die Ventileinrichtung mit einem Betätigungsteil, insbesondere einem Hebelarm, zum Betätigen der Ventileinrichtung einen Einfluss auf die Entstehung der Geräusche haben kann. Durch die erfindungsgemäße Ventileinrichtung ist jedoch auch diese mögliche Ursache der Geräusche reduziert oder vermieden, so dass die erfindungsgemäße Ventileinrichtung ein verbessertes Geräuschverhalten aufweist.

Bei einer besonders vorteilhaften Ausführungsform der Erfindung ist die Ventilfläche punktasymmetrisch ausgebildet. Dadurch wird die Selbstanregung besonders effizient vermieden oder besonders wirkungsvoll in Frequenzbereiche verschoben, in welchen die Geräusche nicht hörbar sind.

Die Ventilfläche ist achsenasymmetrisch ausgebildet, um die Entstehung der Geräusche zu vermeiden oder in einen nicht hörbaren Frequenzbereich zu verschieben.

Der Ventilteller ist zumindest im Wesentlichen durch einen zumindest im Wesentlichen scheibenförmigen Grundkörper ausgebildet, welcher asymmetrisch ausgebildet ist. Geht man beispielsweise zunächst von einem symmetrischen, den Ventilteller bildenden Grundkörper aus, so ist dieser Grundkörper bei dieser Ausführungsform der Erfindung zu einer asymmetrischen Ausbildung modifiziert, wodurch insbesondere die Geräuschentwicklung aufgrund der Selbstanregung vermieden ist oder die Geräusche bzw. die Selbstanregung in Frequenzbereiche verschoben ist, in welchen die Geräusche nicht für das menschliche Gehör wahrnehmbar sind.

Es weist der Ventilteller bzw. die Ventilfläche wenigstens eine sich zumindest im Wesentlichen in radialer Richtung erstreckende Ausbuchtung und/oder Ausnehmung auf. Geht man beispielsweise von einer zumindest im Wesentlichen kreisrunden Ventilfläche des Ventiltellers aus, so bedeutet dies, dass diese zumindest im Wesentlichen kreisrunde Ventilfläche mit der wenigstens einen Ausbuchtung und/oder mit der wenigstens einen Ausnehmung versehen ist, um somit die Ventilfläche bzw. den Ventilteller asymmetrisch, insbesondere punktasymmetrisch und/oder achsenasymmetrisch, auszubilden. So können die unangenehmen Geräusche besonders effizient und kostengünstig vermieden oder reduziert oder in Frequenzbereiche verschoben werden, in welchen sie nicht von dem menschlichen Gehör wahrnehmbar sind.

Die Ventilfläche bzw. der Ventilteller weist wenigstens eine sich zumindest im Wesentlichen in axialer Richtung erstreckende Ausbuchtung und/oder Ausnehmung auf. Dies bedeutet, dass beispielsweise die bezogen auf die radiale Richtung in Umfangsrichtung zumindest im Wesentlichen kreisrunde Ventilfläche bzw. der entsprechende Ventilteller mit der wenigstens einen Ausbuchtung und/oder Ausnehmung versehen ist, welche sich zumindest im Wesentlichen in axialer Richtung und damit zumindest im Wesentlichen senkrecht zur radialen Richtung erstreckt. So können die Geräusche besonders günstig und vorteilhaft vermieden oder reduziert oder in Frequenzbereiche verlagert werden, in welchen sie nicht von dem menschlichen Gehör wahrnehmbar sind.

Vorteilhafterweise ist die Ausbuchtung und/oder die Ausnehmung zumindest bereichsweise bogenförmig ausgebildet. Dadurch können die Herstellungskosten für die erfindungsgemäße Ventileinrichtung gering gehalten werden, was mit geringen Gesamtkosten für den Abgasturbolader einhergeht. Ferner sind durch die bogenförmige Ausbildung abrupte und scharfkantige Übergänge zwischen wenigstens zwei Längenbereichen und daraus resultierende Kerbwirkungen und hohe Belastungen für die erfindungsgemäße Ventileinrichtung vermieden. Damit weist die erfindungsgemäße Ventileineinrichtung ferner eine besonders hohe Funktionserfüllungssicherheit auf, und das auch über eine hohe Lebensdauer hinweg.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigen:
- Fig. 1: ausschnittsweise eine schematische und teilweise geschnittene Perspektivansicht eines Abgasturboladers für eine Verbrennungskraftmaschine mit einer Turbine mit einer erfindungsgemäßen Ventileinrichtung,
- Fig. 2: eine schematische und perspektivische Vorderansicht eines Ausführungsbeispiels der Ventileinrichtung der Turbine gemäß Fig. 1,
- Fig. 3: eine schematische perspektivische Rückansicht der Ventileinrichtung gemäß Fig. 2,
- Fig. 4: eine schematische und perspektivische Vorderansicht eines weiteren Ausführungsbeispiels der Ventileinrichtung gemäß den Fig. 2 und 3,
- Fig. 5: eine schematische und perspektivische Rückansicht der Ventileinrichtung gemäß Fig. 4,
- Fig. 6: eine schematische und perspektivische Vorderansicht eines alternativen Ausführungsbeispiels der Ventileinrichtung gemäß den Fig. 2 bis 5,
- Fig. 7: eine schematische und perspektivische Rückansicht der Ventileinrichtung gemäß Fig. 6,
- Fig. 8: eine schematische und perspektivische Vorderansicht eines weiteren Ausführungsbeispiels der Ventileinrichtung gemäß den Fig. 2 bis 7,
- Fig. 9: eine schematische und perspektivische Rückansicht der Ventileinrichtung gemäß Fig. 8,
- Fig. 10: eine schematische und perspektivische Vorderansicht eines weiteren Ausführungsbeispiels der Ventileinrichtung gemäß den Fig. 2 bis 9,
- Fig. 11: eine schematische und perspektivische Rückansicht der Ventileinrichtung gemäß Fig. 10,
- Fig. 12: eine schematische und perspektivische Vorderansicht eines weiteren Ausführungsbeispiels der Ventileinrichtung gemäß den Fig. 2 bis 11,
- Fig. 13: eine schematische und perspektivische Rückansicht der Ventileinrichtung gemäß Fig. 12,
- Fig. 14: eine schematische und perspektivische Vorderansicht eines weiteren Ausführungsbeispiels der Ventileinrichtung gemäß den Fig. 2 bis 13 und
- Fig. 15: eine schematische und perspektivische Rückansicht der Ventileinrichtung gemäß Fig. 14.

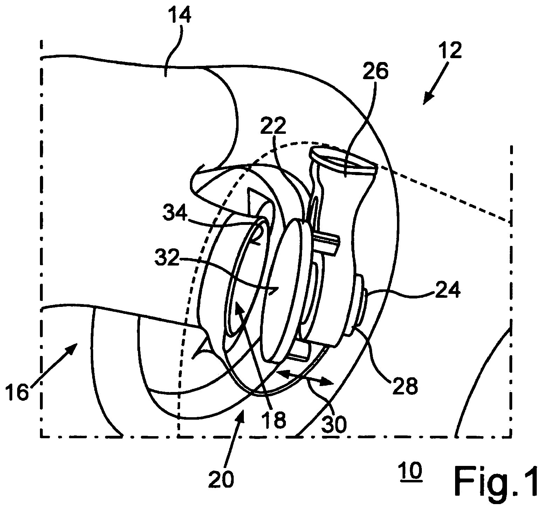

Die Fig. 1 zeigt einen Abgasturbolader 10 für eine beispielsweise als Hubkolbenmaschine ausgebildete, nicht näher dargestellte Verbrennungskraftmaschine. Die Verbrennungskraftmaschine ist dabei mittels des Abgasturboladers 10 aufladbar. Dazu umfasst der Abgasturbolader 10 einen nicht näher dargestellten Verdichter mit einem nicht näher dargestellten Verdichtergehäuse, in welchem ein nicht näher dargestelltes Verdichterrad um eine nicht näher dargestellte Drehachse drehbar aufgenommen ist. Mittels des Verdichters ist der Verbrennungskraftmaschine zuzuführende Luft verdichtbar, so dass die Verbrennungskraftmaschine besonders effizient mit einem geringen Kraftstoffverbrauch betrieben werden kann, was mit geringen CO₂-Emissionen einhergeht.

Zum Antreiben des Verdichters umfasst der Abgasturbolader 10 eine Turbine 12 mit einem Turbinengehäuse 14, in welchem ein nicht näher dargestelltes Turbinenrad um eine nicht näher dargestellte Drehachse drehbar aufgenommen ist. Die Drehachse, die das Turbinenrad drehbar ist, ist dieselbe Drehachse bzw. koaxial zu der Drehachse angeordnet, um welche auch das Verdichterrad zu drehen ist. Das Turbinenrad und das Verdichterrad sind jeweils mit einer nicht näher dargestellten Welle des Abgasturboladers 10 drehfest verbunden. Das Turbinengehäuse 14 umfasst zumindest einen, beispielsweise als ein Spiralkanal ausgebildeten Abgasführungskanal, mittel Hilfe dessen Abgas der Verbrennungskraftmaschine dem Abgasturbolader 10 bzw. dem Turbinenrad zuführbar ist. Das Turbinenrad ist somit von dem Abgas beaufschlagbar und von diesem antreibbar, so dass über die Welle und das Turbinenrad das Verdichterrad zum Verdichten der Luft antreibbar ist.

Zur Regelung des von dem Abgasturbolader 10 bereitgestellten Ladedrucks und/oder zur Darstellung einer besonders hohen Durchsatzparameters der Turbine 12, d. h. dass eine besonders große Menge bzw. Masse an Abgas die Turbine 12 durchströmen kann, umfasst die Turbine 12 eine Umgehungseinrichtung 16 mit einem Umgehungskanal 18. Der Umgehungskanal 18 mündet dabei einerseits in Strömungsrichtung des Abgases durch die Turbine 12 stromauf des Turbinenrads in einen oder den Abgaszuführungskanals zum Zuführen des Abgases zu dem Turbinenrad. Andererseits mündet der Umgehungskanal 18 stromab des Turbinenrad in einem nicht näher dargestellten Turbinenradaustrittsbereich. Somit kann Abgas von stromauf des Turbinenrads abgezweigt und unter Umgehung des Turbinenrads zu stromab desselbigen geführt werden. Dabei treibt dieses abgezweigte Abgas das Turbinenrad nicht an. Dieses Umgehen des Turbinenrads wird auch als Abblasen bezeichnet, weshalb die Umgehungseinrichtung 16 auch als Abblaseeinrichtung bezeichnet wird.

Zur bedarfsgerechten Einstellung und Durchführung dieses Umgehens umfasst die Umgehungseinrichtung 16 eine Ventileinrichtung 20 mit einem Ventilteller 22, welcher mit einem Ventilkopf 24 verbunden, insbesondere einstückig ausgebildet, ist. Über den Ventilkopf 24 ist die Ventileinrichtung 20 mit einem Hebelarm 26 einer nicht näher dargestellten Betätigungseinrichtung für die Ventileinrichtung 20 verbunden, so dass die Ventileinrichtung 20 über den Hebelarm 26 zwischen zumindest zwei Stellungen bewegt, insbesondere verdreht, werden kann. In einer dieser Stellungen, welche beispielsweise in der Fig. 1 dargestellt ist, gibt die Ventileinrichtung 20 den Umgehungskanal 18 frei, so dass Abgas den Umgehungskanal 18 durchströmen und somit das Turbinenrad umgehen kann.

In der zumindest einen weiteren Stellung der Ventileinrichtung 20 ist der Umgehungskanal 18 fluidisch zumindest im Wesentlichen durch die Ventileinrichtung 20 und insbesondere durch den Ventilteller 22 versperrt, so dass der Umgehungskanal 18 nicht von Abgas durchströmt werden kann und das zumindest im Wesentlichen gesamte Abgas das Turbinenrad beaufschlagt und dieses antreibt. Selbstverständlich kann vorgesehen sein, dass die Ventileinrichtung 20 zwischen einer Mehrzahl von Stellungen stufenlos oder gestuft verstellbar ist, um somit eine Menge bzw. eine Masse des den Umgehungskanal 18 durchströmenden Abgases bedarfsgerecht und variabel einstellen zu können. Mit anderen Worten ermöglicht es die Ventileinrichtung 20, einen Strömungsquerschnitt des Umgehungskanals 18 einzustellen, und den Umgehungskanal 18 zumindest teilweise fluidisch freizugeben oder demgegenüber zumindest teilweise fluidisch zu versperren.

Zur Verbindung der Ventileinrichtung 20 mit dem Hebelarm 26 ist ein Ventilring 28 vorgesehen, mittels welchem die Ventileinrichtung 20 an dem Hebelarm 26 gehalten ist. Die Verbindung bzw. Halterung der Ventileinrichtung 20 an dem Hebelarm 26 weist ein Spiel auf, das es erlaubt, insbesondere fertigungs- und/oder montagebedingte Toleranzen auszugleichen. Ferner erlaubt diese spielbehaftete Halterung einen Winkelausgleich, um die gewünschte Funktion der Ventileinrichtung 20 zu gewährleisten.

Zum fluidischen Versperren des Umgehungskanals 18 ist durch den Ventilteller 22 eine bezogen auf die durch einen Richtungspfeil 30 angedeutete axiale Richtung der Ventileinrichtung 20 stirnseitige Ventilfläche 32 gebildet. Durch das Turbinengehäuse 14 ist ein zu der Ventilfläche 32 korrespondierender Ventilsitz 34 gebildet, an welchem die Ventilfläche 32 zum fluidischen Versperren des Umgehungskanals 18 anliegt bzw. auf welchem die Ventilfläche 32 bzw. der Ventilteller 22 sitzt.

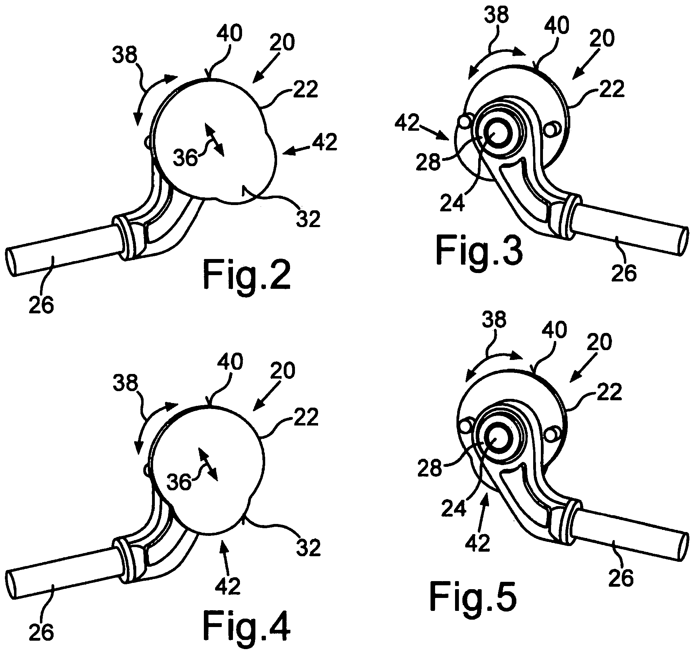

Um nun die Entstehung unerwünschter Geräusche, beispielsweise eines Klapperns, Rasselns, Knisterns und/oder dergleichen, die aus der spielbehafteten Halterung der Ventileinrichtung 20 an dem Hebelarm 26 und infolge einer sich sukzessive ausbildenden und wieder aufhebenden Berührung der Ventilfläche 32 auf dem Ventilsitz 34 resultieren können, zu vermeiden, ist die Ventilfläche 32 zumindest im Wesentlichen asymmetrisch ausgebildet, wie in Zusammenschau mit den Fig. 2 bis 15 im Folgenden erläutert ist.

Durch diese asymmetrische Ausbildung ist insbesondere eine Entstehung der Geräusche infolge einer Selbstanregung der Ventileinrichtung 20 im Betrieb der Verbrennungskraftmaschine vermieden oder reduziert oder die Geräusche befinden sich in einem Frequenzbereich der Selbstanregung bzw. sind in einen solchen Frequenzbereich verschoben, in dem die Geräusche von dem menschlichen Gehör nicht wahrnehmbar sind.

Die Fig. 2 und 3 zeigen ein mögliches Ausführungsbeispiel der Ventileinrichtung 20, welche an dem Hebelarm 26 gehaltert ist. Wie den Fig. 2 und 3 zu entnehmen ist, ist der Ventilteller 22 ausgehend von einem zumindest im Wesentlichen bezogen auf die radiale Richtung (Richtungspfeil 36) in Umfangsrichtung (Richtungspfeil 38) kreisrunden und zumindest im Wesentlichen scheibenförmigen Zylinder modifiziert und asymmetrisch ausgebildet, so dass die Ventilfläche 32 asymmetrisch ausgebildet ist. Bezogen auf den in Umfangsrichtung (Richtungspfeil 38) zumindest im Wesentlichen kreisrunden Grundkörper weist die Ventilfläche 32 bzw. eine Außenkontur 40 der Ventilfläche 32 eine im Wesentlichen in radialer Richtung (Richtungspfeil 36) verlaufende und bogenförmig ausgebildete Ausbuchtung 42 auf. So sind die geschilderten, unangenehmen und in einem Innenraum eines Kraftwagens, insbesondere eines Personenkraftwagens, mit der Verbrennungskraftmaschine und dem Abgasturbolader 10 gemäß Fig. 1 gegebenenfalls wahrnehmbaren Geräusche reduziert, vermieden oder durch das menschliche Gehör nicht wahrnehmbar.

Die Fig. 4 und 5 zeigen ein alternatives Ausführungsbeispiel der Ventileinrichtung 20 mit dem Ventilteller 22 und der Ventilfläche 32. Wie der Ventilteller 22 gemäß den Fig. 2 und 3 sowie die Ventilfläche 32 gemäß der Fig. 2 und 3 sind auch die Ventilfläche 32 und der Ventile 22 gemäß den Fig. 4 und 5 punktasymmetrisch und somit asymmetrisch ausgebildet, so dass die Geräusche vermieden, reduziert oder zumindest nicht wahrnehmbar sind. Im Vergleich zur Ventileinrichtung 20 gemäß den Fig. 2 und 3 weist die Ausbuchtung 42 nun eine unterschiedliche Orientierung relativ zum Hebelarm 26 auf. Auch weist die Ausbuchtung 42 in Umfangsrichtung (Richtungspfeil 38) eine schmalere Erstreckung auf.

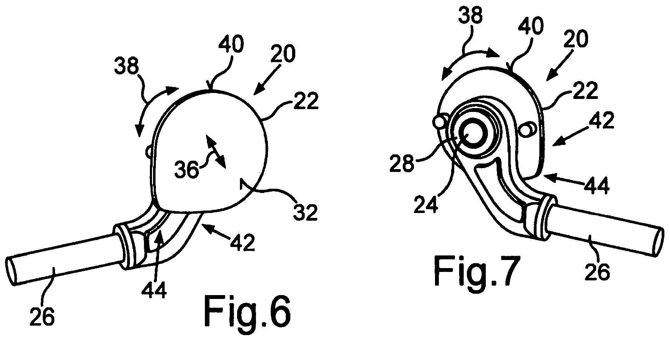

Die Fig. 6 und 7 zeigen eine weitere alternative Ausführungsbeispiel der Ventileinrichtung 20, wobei die Ausbuchtung 42 in Umfangsrichtung (Richtungspfeil 38) eine schmalere Erstreckung als die Ausbuchtungen 42 gemäß den Fig. 2 bis 5 und somit eine ausgeprägtere Spitze 44 aufweist. Ebenso weist die Ausbuchtung 42 eine von den Ventileinrichtungen 20 gemäß den Fig. 2 bis 5 unterschiedliche Orientierungen relativ zum Hebelarm 26 auf.

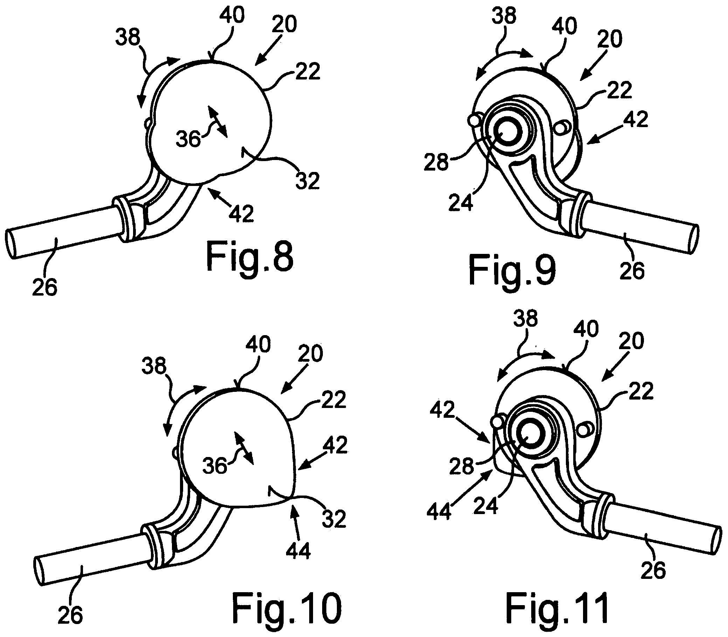

Die Fig. 8 und 9 zeigen eine weitere Ausführungsbeispiel der Ventileinrichtung 20, wobei die Ausbuchtung 42 hierbei zu der Ausbuchung 42 gemäß der Fig. 6 und 7 in Umfangsrichtung eine breitere Erstreckung sowie eine relativ zum Hebelarm 26 unterschiedliche Orientierung aufweist.

Die Fig. 10 und 11 zeigen eine weitere alternative Ausführungsbeispiel der Ventileinrichtung 20, wobei die Ausbuchtung 42 gegenüber der Ausbuchtung 42 gemäß den Fig. 8 und 9 eine in Umfangsrichtung schmalere Erstreckung und eine ausgeprägtere Spitze 44 aufweist. Ferner weist die Ausbuchtung 42 relativ zum Hebelarm 26 eine unterschiedliche Orientierung, insbesondere in Umfangsrichtung auf.

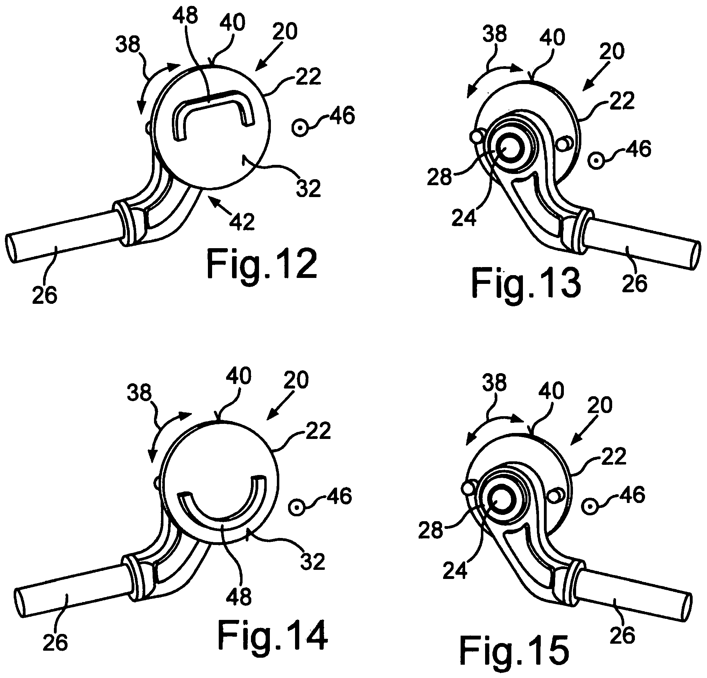

Die Fig. 12 und 13 zeigen ein weiteres alternatives Ausführungsbeispiel der Ventileinrichtung 20 mit den Ventilteller 22, durch welchen die Ventilfläche 32 gebildet ist. Die Ventilfläche 32 weist nun ausgehend von dem zumindest im Wesentlichen in Umfangsrichtung kreisrunden Grundkörper keine durch die Radialeinrichtung erstreckende Ausbuchtung auf. Vielmehr weist die Ventilfläche 32 eine in axialer Richtung (Richtungspfeil 46) verlaufende Ausbuchtung 48 auf, welche einen offenen Querschnitt aufweist und zumindest teilweise bogenförmig ausbildet ist. Mit anderen Worten ist die Ventilfläche 32 mit der sich in axialer Richtung erstreckenden Ausbuchtung 48 versehen. Dadurch können die insbesondere durch Selbstanregung entstehenden Geräusche vermieden, reduziert und/oder in nicht hörbare Frequenzbereiche verschoben bzw. verlagert werden. Der Ventilteller 22 bzw. die Ventilfläche 32 weisen in Umfangsrichtung die zumindest im Wesentlichen kreisrunde Außenkontur 40 auf.

Die Fig. 14 und 15 zeigen ein alternatives Ausführungsbeispiel der Ventileinrichtung 20 gemäß den Fig. 12 und 13. Das Ausführungsbeispiel der in den Figuren 12 und 13 gezeigten Ventileinrichtung weist die Ausbuchtung 48 in einer zur Ausführungsbeispiel in Fig. 14 und Fig. 15 gezeigten bezogen auf den Hebelarm 26 entgegensetzten Anordnung auf. Das heißt, während die Ausbuchtung 48 in dem Ausführungsbeispiel der Figuren 12 und 13 in einem dem Hebelarm 26 gegenüberliegenden Bereich der Ventilfläche 32 angeordnet ist, ist die Ausbuchtung 48 in dem Ausführungsbeispiel der Figuren 14 und 15 in einem Hebelarm 26 nahen Bereich der Ventilfläche 32 ausgebildet. Die Ventilfläche 32 gemäß den Fig. 14 und 15 weist eine zumindest im Wesentlichen bogenförmige und sich in axialer Richtung (Richtungspfeil 46) erstreckende Ausbuchtung 48 auf, wobei hier die Ausbuchtung 48 als offener Halbkreisring bzw. Halbkreissegment ausgebildet ist, um dadurch die unangenehmen Geräusch zu vermeiden, zu reduzieren und/oder in nicht hörbare Frequenzbereiche zu verschieben.

## Patentansprüche

1. Ventileinrichtung (20) für ein Abblaseventil eines Abgasturboladers (10), mit einem Ventilteller (22), mittels welchem ein Strömungsquerschnitt eines Umgehungskanals (18) des Abgasturboladers (10), über welchen ein Laufrad des Abgasturboladers (10) von einem Gas zu umgehen ist, einstellbar ist, und durch welchen eine stirnseitige Ventilfläche (32) gebildet ist, und wobei ein zur Ventilfläche (32) korrespondierender Ventilsitz (34) durch ein Turbinengehäuse (14) des Abgasturboladers (10) gebildet ist, und wobei die Ventileinrichtung (20) an einem Hebelarm (26) gehalten ist, wobei die Halterung der Ventileinrichtung (20) am Hebelarm (26) ein Spiel aufweist, und wobei der Ventilteller (22) durch einen zumindest scheibenförmigen und asymmetrisch ausgebildeten Grundkörper gebildet ist, und wobei die Ventilfläche (32) eine in radialer Richtung (36) verlaufende Ausbuchtung (42) aufweist, derart, dass die Ventilfläche (32) asymmetrisch ausgebildet ist,
**dadurch gekennzeichnet, dass**
die Ventilfläche (32) eine Symmetrieachse bezogen auf den im Wesentlichen kreisrunden Grundkörper aufweist, entlang derer eine Befestigung der Ventilfläche (32) an dem Hebelarm (26) der Ventileinrichtung (20) ausgebildet ist, wobei die asymmetrische Ausbildung der Ventilfläche (32) symmetrisch zur Symmetrieachse ausgebildet ist, und wobei die Symmetrieachse asymmetrisch zu einer Längsachse des Hebelarms (26), welche einer Drehachse der Ventileinrichtung (20) entspricht, ausgebildet ist.

2. Abgasturbolader (10) mit einer Ventileinrichtung (20) nach Anspruch 1.

## Claims

1. A valve means (20) for a bleed valve of an exhaust gas turbocharger (10), with a valve disk (22), by means of which the flow cross-section of a bypass duct (18) of the exhaust gas turbocharger (10), via which gas may bypass an impeller of the exhaust gas turbocharger (10) is adjustable, and which forms a front end valve face (32), and wherein a valve seat (34) corresponding to the valve face (32) is formed by a turbine casing (14) of the exhaust gas turbocharger (10), and wherein the valve means (20) is held on a lever arm (26), wherein the mounting of the valve means (20) on the lever arm (26) exhibits play, and wherein the valve disk (22) is formed by a base body which is at least disk-shaped and asymmetric, and wherein the valve face (32) comprises a projection (42) which extends in the radial direction (36), with the valve face (32) being formed asymmetric,
**characterised in that**
the valve face (32) comprises an axis of symmetry relative to the essentially circular base body, along which an attachment of the valve face (32) at a lever arm (26) of the valve means (20) is formed, wherein the asymmetric valve face (32) is formed symmetric to the axis of symmetry, and wherein the axis of symmetry is formed asymmetric to a longitudinal axis of the lever arm (26) which corresponds to an axis of rotation of the valve means (20).

2. An exhaust gas turbocharger (10) with a valve means (20) according to Claim 1.

## Revendications

1. Dispositif formant soupape (20) pour une soupape d'évacuation d'un turbocompresseur à gaz d'échappement (10), comportant une tête de soupape (22) au moyen de laquelle une section d'écoulement d'un canal de contournement (18) du turbocompresseur à gaz d'échappement (10), par lequel une roue du turbocompresseur à gaz d'échappement (10) doit être contournée par un gaz, peut être réglée et au moyen de laquelle une surface de soupape frontale (32) est formée, et dans lequel un siège de soupape (34) correspondant à la surface de soupape (32) est formé par un carter de turbine (14) du turbocompresseur à gaz d'échappement (10), et dans lequel le dispositif formant soupape (20) est maintenu sur un bras de levier (26), le maintien du dispositif formant soupape (20) sur le bras de levier (26) présentant un jeu, et dans lequel la tête de soupape (22) est formée par un corps de base au moins en forme de disque et formé de manière asymétrique, et dans lequel la surface de soupape (32) présente un renflement (42) s'étendant dans la direction radiale (36) de telle sorte que la surface de soupape (32) est formée de manière asymétrique,
**caractérisé en ce que**
la surface de soupape (32) présente un axe de symétrie par rapport au corps de base sensiblement circulaire, le long duquel est formée une fixation de la surface de soupape (32) sur le bras de levier (26) du dispositif formant soupape (20), dans lequel la formation asymétrique de la surface de soupape (32) est formée symétriquement par rapport à l'axe de symétrie, et dans lequel l'axe de symétrie est formé asymétriquement par rapport à un axe longitudinal du bras de levier (26) qui correspond à un axe de rotation du dispositif formant soupape (20).

2. Turbocompresseur à gaz d'échappement (10) comprenant un dispositif formant soupape (20) selon la revendication 1.
